# EUROPÄISCHE PATENTANMELDUNG

(11) **EP 2 857 176 A1**
(43) Veröffentlichungstag der Anmeldung: **08.04.2015**
(21) Anmeldenummer: 13186856.4
(22) Anmeldetag: 01.10.2013
(51) Int. Cl.: B29C 67/00, B22F 3/105

(54) **Vorrichtung für den schichtweisen Aufbau von Bauteilen**

(71) Anmelder: Siemens Aktiengesellschaft, 80333 München (DE)
(72) Erfinder: Deiss, Olga, 40627 Düsseldorf (DE)

(57) **Zusammenfassung**

Die Erfindung führt eine Vorrichtung (1) für den schichtweisen Aufbau eines Bauteils (2) ein. Die Vorrichtung (1) verfügt über einen Pulverspender (3), der ausgebildet ist, eine Pulverschicht eines Pulvers (4) auf eine Arbeitsfläche (5) eines Prozesstischs (6) aufzubringen, eine Strahlenquelle (7) für einen Energiestrahl zum Schmelzen des Pulvers (4) der Pulverschicht und eine Steuereinheit (8) für die Steuerung der Vorrichtung (1). Erfindungsgemäß ist die Vorrichtung (1) mit einer über dem Prozesstisch (6) angeordneten Blende (9) ausgestattet, die einen Durchlass (10) für den Energiestrahl aufweist.

## Beschreibung

### Technisches Gebiet

Die Erfindung betrifft eine Vorrichtung für den schichtweisen Aufbau eines Bauteils und die Verwendung einer solchen Vorrichtung für den schichtweisen Aufbau eines Bauteils.

### Technischer Hintergrund

Methoden für den schichtweisen Aufbau von Bauteilen genießen steigende Aufmerksamkeit. Sie erlauben den schnellen Aufbau eines Prototyps eines Bauteils, beispielsweise wenn dessen Geometrie darauf untersucht werden soll, ob sie die gewünschten Eigenschaften bietet, und erspart die kostenintensive und langwierige Fertigung von Gusswerkzeugen oder dergleichen, die erst für die Serienfertigung benötigt werden, wenn die endgültige Form des Bauteils feststeht. Doch auch für die Serienproduktion von Bauteilen kommt der Schichtaufbau infrage, beispielsweise bei Kleinserien und hochpreisigen Bauteilen und solchen mit strengen Anforderungen an die Geometrie und das innere Gefüge des Bauteils.

Bei den hier infrage stehenden Verfahren wird ein Pulver, häufig ein metallisches Pulver, gleichmäßig in einer feinen Schicht auf einen Prozesstisch aufgebracht und die Pulverschicht anschließend durch einen Energiestrahl, meistens durch einen Laser- oder Elektronenstrahl, selektiv, das heißt nur an den Stellen, die später Teil des zu fertigen Bauteils bilden sollen, und den Orten etwaiger Stützstrukturen, die für die Fertigstellung des Bauteils entfernt werden, aufgeschmolzen. Nach dem Aushärten des derart aufgeschmolzenen Pulvers wird eine neue Pulverschicht aufgebracht und auch diese selektiv aufgeschmolzen. Dies wird solange fortgesetzt, bis das Bauteil komplett aufgebaut ist. Gegebenenfalls kann der Prozesstisch jeweils zwischen zwei Schichten abgesenkt oder die Strahlenquelle angehoben werden, um den ursprünglichen Abstand zwischen der Strahlenquelle und der Arbeitsfläche des Prozesstisches beizubehalten. Das Verfahren wird vorzugsweise unter Vakuum oder in einer Inertgasatmosphäre durchgeführt, um chemische Reaktionen des Pulvers beim Aufschmelzen zu vermeiden.

Jede derartig aufgebrachte Schicht stellt einen Querschnitt durch das Bauteil dar, das durch eine Vielzahl solcher Schichten aufgebaut wird. Hierbei ist problematisch, dass ein Defekt in einer Schicht, der beispielsweise durch eine Verunreinigung des Pulvers oder durch eine ungleiche Dicke der Pulverschicht verursacht wurde, auch die Qualität der nachfolgenden Schichten beeinträchtigt. Deshalb werden nur Pulver aus höchstreinem Material verwendet und mit hohen Aufwand gesiebt, um sicherzustellen, dass ein höchstmöglicher Anteil der Partikel des Pulvers eine Ausdehnung aus einem möglichst engen Größenintervall besitzt. Da das Pulver aufgrund des hohen Aufwandes für das Sieben teuer ist, wird der nicht durch den Energiestrahl aufgeschmolzene Teil des Pulvers für weitere Produktionsgänge wiederverwendet.

Die Erfindung macht es sich zur Aufgabe, eine verbesserte Vorrichtung für den schichtweisen Aufbau von Bauteilen einzuführen.

### Zusammenfassung der Erfindung

Die Erfindung führt daher eine Vorrichtung für den schichtweisen Aufbau eines Bauteils ein. Die Vorrichtung verfügt über einen Pulverspender, der ausgebildet ist, eine Pulverschicht eines Pulvers auf eine Arbeitsfläche eines Prozesstischs aufzubringen, eine Strahlenquelle für einen Energiestrahl zum Schmelzen des Pulvers der Pulverschicht und eine Steuereinheit für die Steuerung der Vorrichtung. Erfindungsgemäß ist die Vorrichtung mit einer über dem Prozesstisch angeordneten Blende ausgestattet, die einen Durchlass für den Energiestrahl aufweist.

Die Vorrichtung der Erfindung besitzt den Vorteil, dass beim Aufschmelzen des Pulvers durch den Energiestrahl enstehende Schweißspritzer durch den Durchlass der Blende auf deren Oberseite springen und dort verbleiben, so dass ein Zurückfallen in das Pulverbett der Schweißspritzer verhindert wird.

Die Erfindung beruht auf der Erkenntnis und schließt diese mit ein, dass beim Aufschmelzen des Pulvers durch den Energiestrahl unweigerlich Schweißspritzer entstehen, die meist größer als die Partikel des verwendeten Pulvers sind. Die Schweißspritzer verteilen sich auf dem Pulverbett und werden im weiteren Verlauf der Fertigung mit eingeschmolzen. Aufgrund der abweichenden Partikelgröße und des mehrfachen Aufschmelzens der Schweißspritzer werden die Materialeigenschaften sowie die Oberflächengüte des zu fertigenden Bauteils beeinträchtigt. Außerdem vermischen sich die Schweißspritzer mit dem verbleibenden Pulver, das für weitere Fertigungsdurchgänge wiederverwendet wird, wodurch die Qualität des Pulvers kontinuierlich sinkt und die später aus derselben Pulvercharge gefertigten Bauteile eine größere Zahl von Defekten aufweisen als die in derselben Serie früher gefertigten Bauteile.

Als Energiestrahl werden bevorzugt ein Laserstrahl oder ein Elektronenstrahl verwendet. In letzterem Fall sollte die Blende aus einem nichtleitenden hitzebeständigen Material gefertigt werden, beispielsweise aus einem keramischen Material.

Die Blende ist vorzugsweise beweglich ausgebildet und mit wenigstens einem Aktuator ausgestattet, der ausgebildet ist, die Blende von der Arbeitsfläche wegzubewegen. Dies ist vorteilhaft, da die Blende andernfalls bei der Aufbringung einer weiteren Pulverschicht auf das Pulverbett auf dem Prozesstisch hinderlich ist. Es kann beispielsweise vorgesehen sein, die Blende zur Seite wegzufahren oder wegzuschwenken.

Insbesondere kann dabei der wenigstens eine Aktuator außerdem dazu ausgebildet sein, die Blende in einer sich quer zu einer Einfallrichtung des Energiestrahls erstreckenden Ebene zu verschieben. Außerdem kann eine Ablenkungseinheit vorgesehen sein, die ausgebildet ist, den Energiestrahl auf eine wählbare Stelle der Arbeitsfläche zu richten. Wird ein Laserstrahl verwendet, kann die Ablenkungseinheit eine geeignete Optik oder bewegliche Spiegel enthalten. Wird ein Elektronenstrahl verwendet, kann die Ablenkeinheit nach dem Prinzip der Braunschen Röhre Elektroden enthalten, die die Flugbahn der Elektronen über die an den Elektroden anliegenden Spannungen beeinflussen.

Die Steuereinheit ist bei derartigen Ausführungsformen der Erfindung mit der Ablenkungseinheit und dem Aktuator verbunden und dazu ausgebildet, der Ablenkungseinheit die wählbare Stelle vorzugeben und den Aktuator zu veranlassen, den Durchlass der Blende über der wählbaren Stelle zu positionieren.

Alternativ kann auch der Prozesstisch quer zu einer Einfallrichtung des Energiestrahls verschiebbar sein. In diesem Fall verbleiben die Strahlenquelle und die Blende an demselben Ort und der Prozesstisch kann verschoben werden, um den Arbeitspunkt des Energiestrahle auf der Pulverschicht zu wählen oder eine neue Pulverschicht aufzutragen.

Vorzugsweise ist der Durchlass kreisförmig, so dass Schweißspritzer in alle Richtungen gleichermaßen aufgefangen werden können.

Ein Abstand der Blende zu der Pulverschicht ist bevorzugt kleiner als ein Durchmesser des Durchlasses. Der Durchmesser des Durchlasses kann beispielsweise im Bereich von etwa einem Millimeter bis zu etwa einem Zentimeter liegen. Wird der Durchmesser zu klein gewählt, können Schweißspritzer durch die Blende abgeschirmt werden und auf deren Unterseite verbleiben, wird der Durchmesser zu groß gewählt, können Schweißspritzer wieder in das Pulverbett zurückfallen, statt von der Oberseite der Blende aufgefangen zu werden.

Die Blende kann ausgebildet sein, den Prozesstisch bis auf den Durchlass vollständig abzudecken. Dadurch wird sichergestellt, dass auch keine unerwartet weit fliegenden Schweißspritzer jenseits der Blende wieder in das Pulverbett fallen. Insbesondere kann die Blende eine Blendenfläche besitzen, die wenigstens viermal so groß wie die Arbeitsfläche ist. Wenn der Durchlass in der Mitte der Blende angeordnet ist, führt dies bei einer rechteckigen Form der Arbeitsfläche dazu, dass auch bei einer Positionierung des Energiestrahls über den Ecken der Arbeitsfläche die Blende noch die gesamte Arbeitsfläche abdeckt.

Die Blende kann einen Rand aufweisen, der auf einer Oberseite der Blende angeordnet ist und sich wenigstens über einen Teil eines Umfangs der Blende oder des Durchlasses oder des Umfangs der Blende und des Durchlasses erstreckt. Der Rand besitzt den Vorteil, dass auf die Blende gesprungene Schweißspritzer nicht von der Blende in das Pulverbett fallen können. Diese Gefahr bestünde insbesondere, wenn die Blende während des Fertigungsprozesses bewegt wird.

Die Vorrichtung kann mit einem Abstreifer ausgestattet sein, der ausgebildet ist, über eine von der Arbeitsfläche abgewandte Seite der Blende zu streifen und dabei auf der abgewandten Seite befindliche Schweißspritzer zu entfernen. Der Abstreifer besitzt den Vorteil, dass größere Ansammlungen von Schweißspritzern auf der Oberseite der Blende vermieden und die Schweißspritzer entfernt werden können. Der Abstreifer kann beispielsweise seitlich neben dem Prozesstisch angeordnet sein. Wird in einem solchen Fall die Blende wegbewegt, beispielsweise um die Arbeitsfläche für den Pulverspender für das Auftragen einer weiteren Pulverschicht zugänglich zu machen, kann der Abstreifer gleichzeitig über die Oberseite der Blende streifen und die darauf befindlichen Schweißspritzer in einen Auffangbehälter abstreifen.

Ein zweiter Aspekt der Erfindung betrifft die Verwendung der erfindungsgemäßen Vorrichtung für die Fertigung eines Bauteils. Mit der Vorrichtung lassen sich Bauteile verbesserter Güte herstellen, wobei gleichzeitig die Qualität des verbleibenden unverbrauchten Pulvers für einen nachfolgenden Fertigungsgang erhalten bleibt.

### Ausführungsbeispiel

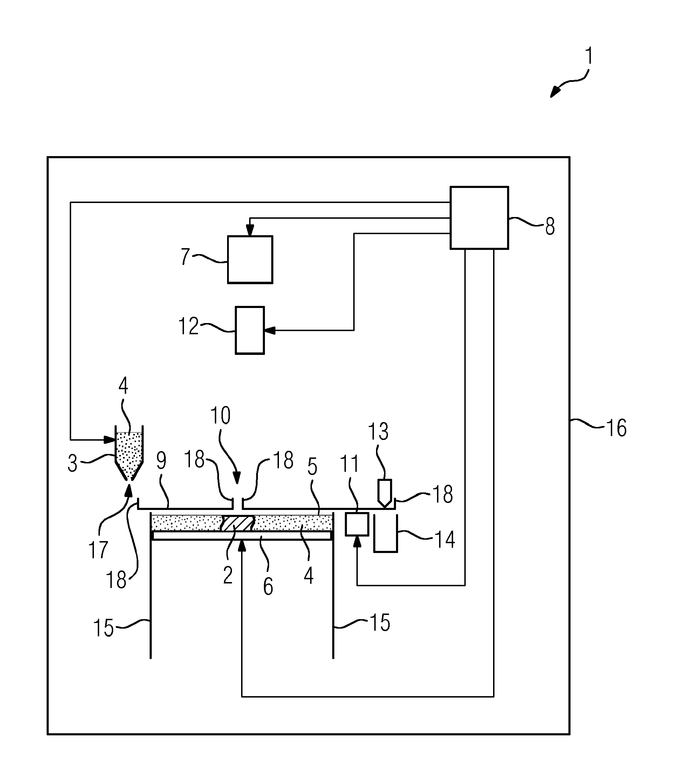

Die einzige Abbildung Fig. 1 zeigt ein Ausführungsbeispiel der erfindungsgemäßen Vorrichtung 1. Die Vorrichtung 1 besitzt eine Vakuumkammer 16, in der das Bauteil 2 unter einer Niedrigdruckatmosphäre gefertigt wird. Es kann auch vorgesehen sein, die Vakuumkammer 16 nach der Evakuierung mit einem Inertgas zu spülen oder zu füllen.

Die Vorrichtung 1 umfasst einen Pulverspender 3, der im einfachsten Fall ein als Material für das Bauteil 2 vorgesehenes Pulver 4 aufnimmt und relativ zu einer Arbeitsfläche 5 eines Prozesstisches 6 beweglich angeordnet sein kann. Beispielsweise kann der Pulverspender 3 einen automatisch öffen- und verschließbaren Pulverauslass 17 besitzen. Wird der Pulverspender 3 bei geöffnetem Auslass über die Arbeitsfläche 5 bewegt, fällt eine gleichmäßige Pulverschicht des Pulvers 4 auf die Arbeitsfläche 5. Der Pulverspender 3 kann nach im Stand der Technik bekannter Art aufgebaut sein und beispielsweise eine Rührvorrichtung umfassen, die einen gleichbleibenden Fluss des Pulvers 4 gewährleistet.

Der Prozesstisch 6 ist vorzugsweise in vertikaler Richtung beweglich aufgebaut, wodurch er mit Vorranschreiten der Fertigung des Bauteils 2 derart abgesenkt werden kann, dass die Arbeitsfläche 5 einen gleichbleibenden Abstand zu einer im gezeigten Beispiel über dem Prozesstisch 6 angeordneten Strahlenquelle 7 für einen Energiestrahl aufweist. Der Prozesstisch 6 kann beispielsweise eine Wandung 15 aufweisen, die das Pulver 4 auf dem Prozesstisch 6 an einem seitlichen Herausfallen vom Prozesstisch 6 hindert. Die Wandung 15 kann dabei unbeweglich ausgeführt sein, auch wenn der Prozesstisch 6 vertikal beweglich ist.

Die Strahlenquelle 7 kann statt über dem Prozesstisch 6 auch an einer anderen Stelle der Vorrichtung 1 angeordnet sein, wenn der Energiestrahl geeignet umgeleitet werden kann. So ist es bei Verwendung eines Laserstrahls als Energiestrahl möglich, die Strahlenquelle unterhalb des Prozesstisches 6 anzuordnen und den Laserstrahl über Spiegel umzuleiten, so dass er von oben auf das Pulverbett auf dem Prozesstisch 6 fällt. Bei Verwendung eines Elektronenstrahls ist eine Anordnung der Strahlenquelle über dem Prozesstisch 6 zu bevorzugen.

Die Vorrichtung 1 verfügt über eine Steuereinheit 8, die für die Steuerung der einzelnen Elemente der Vorrichtung 1 vorgesehen ist. So kann die Steuereinheit 8 beispielsweise die Strahlenquelle 7 aktivieren und deaktivieren und andere derartige Steuerungsaufgaben übernehmen.

Erfindungsgemäß ist über dem Prozesstisch 6 eine Blende 9 vorgesehen, die einen Durchlass 10 für den Energiestrahl aufweist. Diese Blende ist dabei während des Schweißens mit dem Energiestrahl nah an der Pulverschicht angeordnet und bietet durch den Durchlass 10 dem Energiestrahl Zugang zum aufzuschmelzenden Pulver. Beispielsweise kann die Blende weniger als einen Zentimeter über der Pulverschicht angeordnet sein. Die Blende bietet den Vorteil, dass beim Schweißen entstehende Schweißspritzer durch den Durchlass 10 hindurchtreten können, jedoch von der Blende 9 an einem Zurückfallen in das Pulverbett gehindert werden. Dadurch wird eine Verunreinigung des Pulvers 4 mit verhältnismäßig grobkörnigen Schweißspritzern verhindert, was die Qualität des gefertigten Bauteils 2 und die Wiederverwendbarkeit des überschüssigen Pulvers 4 im Pulverbett erhöht.

Um einfachen Zugang zum Pulverbett zu ermöglichen, kann die Blende 9 beweglich und mit wenigstens einem Aktuator 11 ausgestattet sein, der die Blende 9 wegbewegen kann. Dies ist insbesondere für das Auftragen einer neuen Pulverschicht durch den Pulverspender 3 sinnvoll.

Das gezeigte Ausführungsbeispiel besitzt außerdem eine Ablenkungseinheit 12, die dazu vorgesehen ist, den Energiestrahl an eine wählbare Stelle der Arbeitsfläche zu lenken. Im Fall eines Lasers kann das eine optische Einheit mit Spiegeln sein, im Fall eines Elektronenstrahls eine Einheit mit Elektroden. Alternativ kann jedoch auch der Prozesstisch 6 seitlich bewegbar ausgeführt sein. In einem solchen Fall kann der Energiestrahl ohne Ablenkungseinheit 12 und in unveränderbarer Richtung auf das Pulverbett gerichtet werden. Die Blende 9 verbleibt in einem solchen Fall für die Dauer eines Schweißdurchgangs an derselben Stelle und der Prozesstisch 6 wird so bewegt, dass die Stellen der Pulverschicht, die durch den Energiestrahl aufgeschmolzen werden sollen, nacheinander unter den Energiestrahl geführt werden. Allerdings ist die präzise seitliche Positionierung des Prozesstisches 6 in der Regel schwieriger als eine entsprechende Ablenkung des Energiestrahls durch eine Ablenkungseinheit 12.

Optional kann ein Abstreifer 13 vorgesehen sein, der oberhalb der Blende 9 angeordnet ist. Beispielsweise kann der Abstreifer 13 als Schaber ausgeführt sein, der auf der Oberfläche der Blende 9 aufsetzt und Schweißspritzer abschabt, während die Blende 9 unter dem Abstreifer 13 durchgeführt wird. Ein Auffangbehälter 14 kann vorgesehen sein, um das abgestreifte Material aufzufangen. Das Abstreifen kann gegebenenfalls durch einen Strom von Inertgas unterstützt werden.

Die Blende 9 kann einen Rand 18 aufweisen, der auf der Oberseite der Blende 9 angeordnet ist. Der Rand 18 weist vorzugsweise vertikal nach oben. Der Rand 18 verhindert, dass auf die Oberseite der Blende 9 gelangte Schweißspritzer in das Pulverbett fallen können. Der Rand kann entlang des gesamten Umfangs der Blende 9 oder auch nur entlang eines Teils des Umfangs verlaufen. Letzteres ist beispielsweise dann sinnvoll, wenn ein Abstreifer 13 vorgesehen ist, der die auf der Blende 9 befindlichen Schweißspritzer über eine Aussparung in dem Rand 18 abstreifen kann. Es ist aber auch vorstellbar, den Rand 18 oder einen Teil davon für diesen Zweck klappbar oder flexibel auszuführen. Außerdem kann der Rand 18 entlang des Umfangs des Durchlasses 10 verlaufen, um ein Hindurchfallen von Schweißspritzern in das Pulverbett durch den Durchlass 10 zu verhindern.

Die Vorrichtung 1 der Erfindung kann verwendet werden, um Bauteile 2 mit einer geringeren Anzahl von Defekten im inneren Gefüge der Bauteile 2 zu fertigen. Außerdem erlaubt es eine häufigere Wiederverwendung des bei der Fertigung eines Bauteils 2 überbleibenden Pulvers 4.

Obwohl die Erfindung im Detail durch das bevorzugte Ausführungsbeispiel näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung, wie er in den Ansprüchen definiert wird, zu verlassen.

## Patentansprüche

1. Eine Vorrichtung (1) für den schichtweisen Aufbau eines Bauteils (2) und mit einem Pulverspender (3), der ausgebildet ist, eine Pulverschicht eines Pulvers (4) auf eine Arbeitsfläche (5) eines Prozesstischs (6) aufzubringen, einer Strahlenquelle (7) für einen Energiestrahl zum Schmelzen des Pulvers (4) der Pulverschicht und einer Steuereinheit (8) für die Steuerung der Vorrichtung (1), **gekennzeichnet durch** eine über dem Prozesstisch (6) angeordnete Blende (9), die einen Durchlass (10) für den Energiestrahl aufweist.

2. Die Vorrichtung (1) des vorhergehenden Anspruchs,
bei der die Blende (9) beweglich ausgebildet und mit wenigstens einem Aktuator (11) ausgestattet ist, der ausgebildet ist, die Blende (9) von der Arbeitsfläche (5) wegzubewegen.

3. Die Vorrichtung (1) des vorhergehenden Anspruchs,
bei der der wenigstens eine Aktuator (11) außerdem ausgebildet ist, die Blende (9) in einer sich quer zu einer Einfallrichtung des Energiestrahls erstreckenden Ebene zu verschieben, und bei der eine Ablenkungseinheit (12) vorgesehen ist, die ausgebildet ist, den Energiestrahl auf eine wählbare Stelle der Arbeitsfläche (5) zu richten, wobei die Steuereinheit (8) mit der Ablenkungseinheit (12) und dem Aktuator (11) verbunden und ausgebildet ist, der Ablenkungseinheit (12) die wählbare Stelle vorzugeben und den Aktuator (11) zu veranlassen, den Durchlass (10) der Blende (9) über der wählbaren Stelle zu positionieren.

4. Die Vorrichtung (1) von Anspruch 1,
bei der der Prozesstisch (6) quer zu einer Einfallrichtung des Energiestrahls verschiebbar ist.

5. Die Vorrichtung (1) von einem der vorhergehenden Ansprüche, bei der der Durchlass (10) kreisförmig ist.

6. Die Vorrichtung (1) von einem der vorhergehenden Ansprüche,
bei der ein Abstand der Blende (9) zu der Pulverschicht kleiner ist als ein Durchmesser des Durchlasses (10).

7. Die Vorrichtung (1) von einem der vorhergehenden Ansprüche,
bei der die Blende (9) ausgebildet ist, den Prozesstisch (6) bis auf den Durchlass (10) vollständig abzudecken.

8. Die Vorrichtung (1) gemäß einem der vorhergehenden Ansprüche,
bei der die Blende (9) weniger als 1 Zentimeter über der Pulverschicht angeordnet ist.

9. Die Vorrichtung (1) gemäß einem der vorhergehenden Ansprüche,
bei der die Blende (9) einen Rand (18) aufweist, der auf einer Oberseite der Blende (9) angeordnet ist und sich wenigstens über einen Teil eines Umfangs der Blende (9) oder des Durchlasses (10) oder des Umfangs der Blende (9) und des Durchlasses (10) erstreckt.

10. Die Vorrichtung (1) gemäß einem der vorhergehenden Ansprüche, mit einem Abstreifer (13), der ausgebildet ist, über eine von der Arbeitsfläche (5) abgewandte Seite der Blende (9) zu streifen und dabei auf der abgewandten Seite befindliche Schweißspritzer zu entfernen.

11. Verwendung der Vorrichtung (1) gemäß einem der vorhergehenden Ansprüche für die Fertigung eines Bauteils (2).
